# EUROPÄISCHE PATENTSCHRIFT

(11) **EP 0 623 240 B1**
(45) Veröffentlichungstag und Bekanntmachung des Hinweises auf die Patenterteilung: **27.03.1996**
(21) Anmeldenummer: 93902042.6
(22) Anmeldetag: 22.01.1993
(51) Int. Cl.: H01H 1/02

(54) **SINTERVERBUNDWERKSTOFF FÜR ELEKTRISCHE KONTAKTE IN SCHALTGERÄTEN DER ENERGIETECHNIK UND VERFAHREN ZU DESSEN HERSTELLUNG**
SINTERED COMPOSITE MATERIALS FOR ELECTRIC CONTACTS IN POWER TECHNOLOGY SWITCHING DEVICES AND PROCESS FOR PRODUCING THEM
MATERIAU COMPOSITE FRITTE POUR DES CONTACTS ELECTRIQUES D'APPAREILS DE COMMUTATION EN TECHNIQUE DES COURANTS FORTS ET PROCEDE POUR SA FABRICATION

(30) Priorität: 24.01.1992 DE 4201940
(43) Veröffentlichungstag der Anmeldung: 09.11.1994
(73) Patentinhaber: SIEMENS AKTIENGESELLSCHAFT, D-80333 München (DE)
(72) Erfinder: HAUNER, Franz, D-8551 Röttenbach (DE)
(86) Internationale Anmeldenummer: DE9300052
(87) Internationale Veröffentlichungsnummer: WO9315517

(56) Entgegenhaltungen:
- EP-A- 0 118 717
- EP-A- 0 164 664
- EP-A- 0 170 812
- DE-A- 2 924 238
- DE-A- 2 932 275
- DE-B- 2 659 012

## Beschreibung

Die Erfindung bezieht sich auf einen Sinterverbundwerkstoff für elektrische Kontakte in Schaltgeräten der Energietechnik, insbesondere für Niederspannungsschaltgeräte, mit der Konstitution AgSnO₂Bi₂O₃CuO und weiteren Metalloxiden. Daneben bezieht sich die Erfindung auch auf ein Verfahren zur Herstellung eines solchen Sinterverbundwerkstoffes.

Insbesondere für Niederspannungsschaltgeräte haben sich Werkstoffe aus Silber, Zinnoxid, Wismutoxid und Kupferoxid bewährt. Diese genügen weitgehend den Forderungen bezüglich Lebensdauer einerseits und Übertemperaturverhalten andererseits. Speziell die Lebensdauer wird durch den Kontaktabbrand und das Schweißverhalten im Schaltbetrieb, das Übertemperaturverhalten dagegen insbesondere durch den Kontaktwiderstand bestimmt. Beispielsweise die aus der EP-A-0 164 664 und der EP-A-0 170 812 bekannten Werkstoffe der Konstitution AgSnO₂Bi₂O₃CuO beziehen sich speziell auf solche Zusammensetzungen, bei denen das Übertemperaturverhalten optimiert ist. Die bekannten Werkstoffe werden üblicherweise durch innere Oxidation von Legierungspulvern hergestellt. Dabei können auch weitere Metalloxide dem inneroxidierten Legierungspulver hinzugefügt werden.

Die bekannten Werkstoffe sollen auch unter Kurzschlußstrombeanspruchung den Anforderungen genügen. Speziell bei Prüfung unter Kurzschlußstrom, d.h. bei Strömen, die erheblich über der Normalstrombeanspruchung des Netzes liegen, wofür für den Einzelfall VDE- bzw. IEC-Normen existieren, dürfen die Kontakte in Abhängigkeit von den spezifizierten Vorsicherungen in Schützen nicht verschweißen bzw. muß eine eventuelle Verschweißung leicht aufbrechbar sein.

Aufgabe der Erfindung ist es daher, einen Sinterverbundwerkstoff der Konstitution AgSnO₂Bi₂O₃CuO aufzufinden, der bezüglich des Kurzschlußstromverhaltens verbessert ist.

Die Aufgabe ist erfindungsgemäß dadurch gelöst, daß bei dem Werkstoff der eingangs genannten Art das weitere Metalloxid separat zugemischtes Zinnoxid ist und/oder Oxide von Eisen und wenigstens ein Element der sechsten Nebengruppe des Periodischen Systems enthält. Beim erfindungsgemäßen Sinterverbundwerkstoff ist das weitere Metalloxid insbesondere Ferrowolframat. Vorzugsweise liegt eine Kombination von zugemischtem Zinnoxid mit Ferrowolframat vor.

Aus der EP-B-0 118 717 war zwar bereits ein Sinterverbundwerkstoff für elektrische Kontakte und ein Verfahren zu dessen Herstellung bekannt, der aus Silber, Zinnoxid, Wismutoxid und Kupferoxid besteht und der weiterhin Wolframoxid und/oder Molybdänoxid als sublimierenden Metalloxidzusatz enthält. Dabei sind das Zinnoxid, das Wismutoxid und das Kupferoxid als globulare Ausscheidungen im Silber in Gefügebereichen bis höchstens 200 µm Durchmesser ausgeschieden, wogegen der sublimierende Metalloxidzusatz aus Wolframoxid und/oder Molybdänoxid in den Oberflächen der Grenzbereiche dieser Silberbereiche verteilt ist. Hergestellt wird dieser Werkstoff dadurch, daß ein Legierungspulver aus AgSnBiCu vorgegebener Zusammensetzung zu einem AgSnO₂Bi₂O₃CuO-Verbundpulver inneroxidiert wird, das Verbundpulver mit WO₃- und/oder MoO₃-Pulver vorgegebener Menge in einer Rührwerksmühle unter Aceton gemischt und dabei die WO₃- und/oder die MoO₃-Pulverteilchen auf der Oberfläche der Verbundpulverteilchen aus AgSnO₂Bi₂O₃CuO verteilt werden.

Letzterer vorbekannte Werkstoff erfüllt allerdings die Anforderungen noch nicht in hinreichender Weise. Demgegenüber wird durch den Zusatz von separatem SnO₂ und/oder FeWO₄ das Kurzschlußverhalten der bekannten Sinterverbundwerkstoffe aus AgSnO₂Bi₂O₃CuO in überraschender Weise verbessert, was sich insbesondere in schweißfreiem Verhalten im Kurzschlußfall auch bei Einsatz höherer Sicherungsstromstärken ausdrückt.

Im Rahmen der Erfindung liegt der Anteil des Zusatzes an separat zugemischtem Zinnoxid bis zu 6 % Massenanteile und an Ferrowolframat bis zu 3 % Massenanteile. Vorzugsweise hat der Werkstoff einen Massenanteil an separat zugemischtem Zinnoxid unter 3 %, insbesondere unter 1,5 % Massenanteile SnO₂, und einen Massenanteil an Ferrowolframat unter 1,5 %, insbesondere unter 0,5 % Massenanteile FeWO₄. Beispielsweise kommt eine Kombination von 1 % Massenanteilen SnO₂ und 0,4 % Massenanteilen FeWO₄ als weitere Metalloxide in Frage. Mit solchen Zusätzen können Werkstoffe der Konstitution AgSnO₂Bi₂O₃CuO mit Zinnoxidgehalten von 3 bis 12,5 m%, Wismutoxidgehalten von 0,5 bis 4 m%, Kupferoxidgehalten von 0,3 bis 1 m% hinsichtlich ihrer Kurzschlußfestigkeit verbessert werden, ohne daß die übrigen Werkstoffeigenschaften verschlechtert werden.

Im Rahmen der Erfindung wird der erfindungsgemäße Werkstoff dadurch hergestellt, daß aus einer AgSnBiCu-Legierung vorgegebener Konzentration ein inneroxidiertes Legierungspulver erzeugt und mit einer vorgegebenen Pulvermenge des weiteren Metalloxides bzw. der weiteren Metalloxide gemischt wird, und daß die Pulvermischung durch sintertechnische Fertigungsschritte zu einem Formkörper mit einer Restporosität von unter 1,5 % verarbeitet wird. Das Mischen des AgSnO₂Bi₂O₃CuO-Pulvers mit dem SnO₂- und/oder FeWO₄-Pulver erfolgt in einer Rührwerkskugelmühle unter Zugabe von organischen Substanzen.

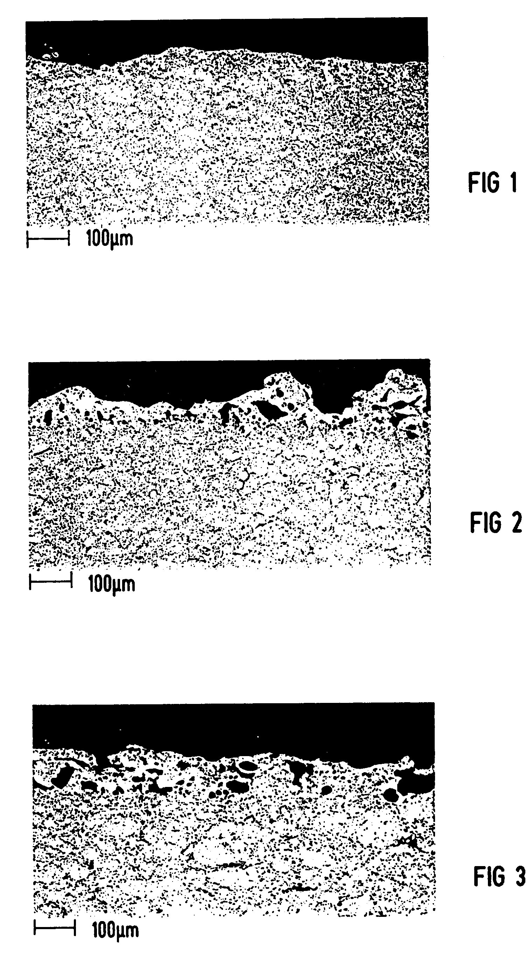

Weitere Vorteile und Einzelheiten der Erfindung ergeben sich aus der nachfolgenden Beschreibung von Beispielen, wobei auf zwei Tabellen Bezug genommen wird. Es zeigen
- Tabelle 1: die Ergebnisse einer Vorbewertung unterschiedlicher Werkstoffe,
- Tabelle 2: die Ergebnisse der Messung in Anlehnung an die IEC-Prüfvorschriften und die
- Figuren 1 bis 3: Gefügebilder unterschiedlicher Werkstoffe mit 100facher Vergrößerung (1 cm 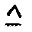 100 µm), woraus jeweils das wirksame Schaltgefüge sichtbar ist.

Sinterverbundwerkstoffe der Konstitution AgSnO₂Bi₂O₃CuO können nach der Methoae der inneren Oxidation von Legierungspulvern, dem sog. IOLP-Verfahren, hergestellt werden. Dazu werden Legierungen aus AgSnBiCu mit vorgegebenen Zusammensetzungen erschmolzen, und die so hergestellte Schmelze wird durch Druckverdüsung in ein Legierungspulver zerstäubt. Das Legierungspulver kann durch thermische Behandlung bei vollständiger innerer Oxidation in ein Verbundpulver überführt werden.

Dem so erzeugten Verbundpulver wird eine geeignete Menge eines separat erzeugten Ferrowolframatpulvers zugemischt. Das Zumischen kann beispielsweise in einer Rührwerkskugelmühle unter Zugabe von organischen Substanzen erfolgen.

Nach Trocknen der Pulvermischung wird durch Pressen, Sintern und Nachverdichten ein Formkörper hergestellt, dessen Restporosität unter 1,5 % liegt. Die Kontakteigenschaften, wie Abbrand im Lichtbogen, Schweißkraft und Kontaktwiderstand werden im Prüfschalter gemessen. Daneben wird im Dauerversuch im Schaltgerät die Lebensdauerschaltzahl einerseits und das Übertemperaturverhalten andererseits ermittelt.

Über obige bekannte Prüfungen hinaus wird weiterhin das Schweißverhalten der beschriebenen Kontaktwerkstoffe unter Kurzschlußstrom geprüft und mit dem Schweißverhalten der bekannten AgSnO₂-Kontaktwerkstoffe verglichen. Dafür wurde zunächst für Vorversuche ein Prüfschütz für 250 A Nennstrom verwendet, wobei ein Kurzschlußstrom mit Scheitelwert von 10 kA durch 10 Halbwellen vorgegeben wird.

In der Tabelle 1 sind drei Gruppen von Werkstoffen angegeben. Die erste Gruppe I betrifft Werkstoffe der Konstitution AgSnO₂Bi₂O₃CuO mit verschiedenen Konzentrationen. In der zweiten Gruppe II sind diesen Werkstoffen alternativ WO₃ bzw. MoO₃-Zusätze hinzugefügt, während die dritte Gruppe III speziell Ferrowolframat als Zusatz beinhaltet.

Die Tabelle 1 zeigt, daß bei den Gruppen I und II alle Werkstoffe bereits bei der ersten Schaltung unter Kurzschlußstrom verschweißen. Dagegen wurde bei den Werkstoffen der dritten Gruppe III auch bei drei Schaltungen unter Kurzschlußstrom noch keine Verschweißung beobachtet. Da diese Werkstoffe auch die Anforderungen bezüglich Lebensdauer im Übertemperaturverhalten erfüllen, scheinen sie für den Einsatz bei Kontaktstücken von Niederspannungsschaltgeräten geeignet.

Weiterhin wurde für unterschiedliche Werkstoffe das Kurzschlußverhalten an einem 55 kW-Prüfschütz geprüft. Als Vorsicherung wurden dabei sogenannte NH-Sicherungen verwendet. Als Maß für die Kurzschlußfestigkeit des Werkstoffes wird die maximale Sicherungsstromstärke herangezogen, bei der die Schaltkontakte noch nicht verschweißt werden.

In der Tabelle 2 sind neben der Gruppe I der Tabelle 1 drei unterschiedliche erfindungsgemäße Werkstoffe entsprechend der Gruppe III der Tabelle 1 dargestellt. Die Prüfungen ergaben, daß die erfindungsgemäßen Werkstoffe gemäß der Gruppe III jeweils eine höhere Stromstärke als der Vergleichswerkstoff vertragen, ohne zu verschweißen. Dabei ergibt sich im einzelnen, daß der Zusatz von separat zugemischtem Zinnoxid einerseits oder Ferrowolframat andererseits in etwa den gleichen Einfluß auf das Kurzschlußstromverhalten hat. Eine Kombination von separat zugemischtem Zinnoxid und Ferrowolframat verbessert das Schweißstromverhalten in optimaler Weise.

Letztere Verbesserungen können durch das Schaltgefüge erklärt werden: Bekannte AgSnO₂Bi₂O₃CuO-Verbundwerkstoffe gemäß Gruppe I von Tabelle 1 und 2 zeigen gemäß Figur 1 ein Gefüge aus Silberteilchen mit SnO₂-, Bi₂O₃- und CuO-Partikeln. In der schmalen Zone des Schaltgefüges sind praktisch keine Poren zu erkennen.

Figur 2 zeigt einen Werkstoff gemäß der Gruppe III der Tabelle 2, der die Konstitution AgSnO₂Bi₂O₃CuO + SnO₂ hat, und Figur 3 zeigt einen Werkstoff gemäß der Gruppe III der Tabelle 2, der die Konstitution AgSnO₂Bi₂O₃CuO + SnO₂ + FeWO₄ hat. In beiden Fällen beträgt die Konzentration des Zinnoxids (SnO₂) im inneroxidierten Legierungspulver 6,5 %. Zugemischt wurde im ersten Fall 1 % SnO₃, im zweiten Fall 1 % SnO₂ + 0,4 % FeWO₄. Beide Werkstoffe wurden der gleichen Kurzschlußstrombeanspruchung unterzogen.

In Figur 2 ist die Zone des Schaltgefüges breiter als in Figur 1 und es sind zahlreiche Poren vorhanden. Dieses Gefüge bewirkt, daß es trotz hoher Kurzschlußströme nicht zu einem Verschweißen der Kontakte kommt oder aber daß diese Verschweißungen zumindest leicht aufbrechbar sind.

In der Figur 3 sind mehr und gröbere Poren als in Figur 2 zu erkennen. Dadurch ist dieser Werkstoff besonders vorteilhaft bezüglich des Kurzschlußstromverhaltens.

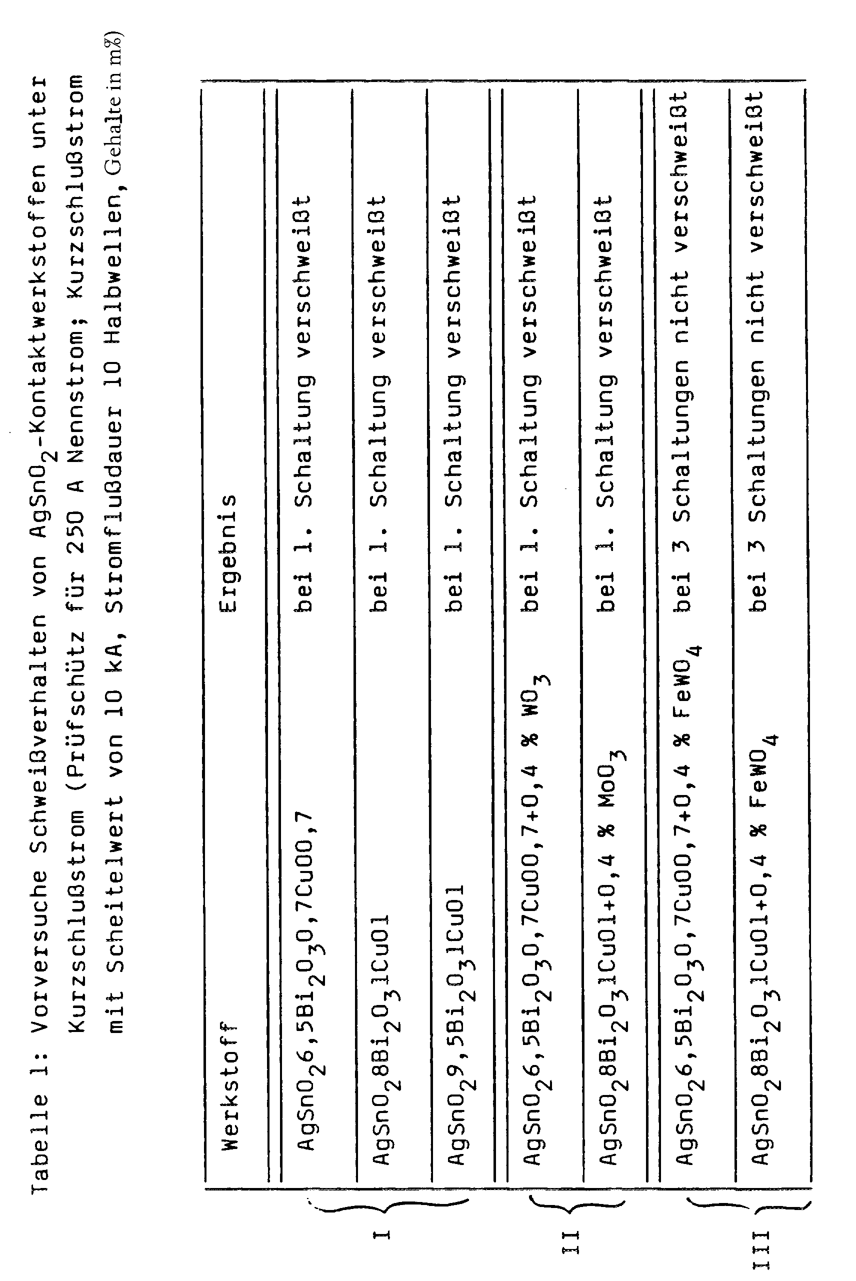

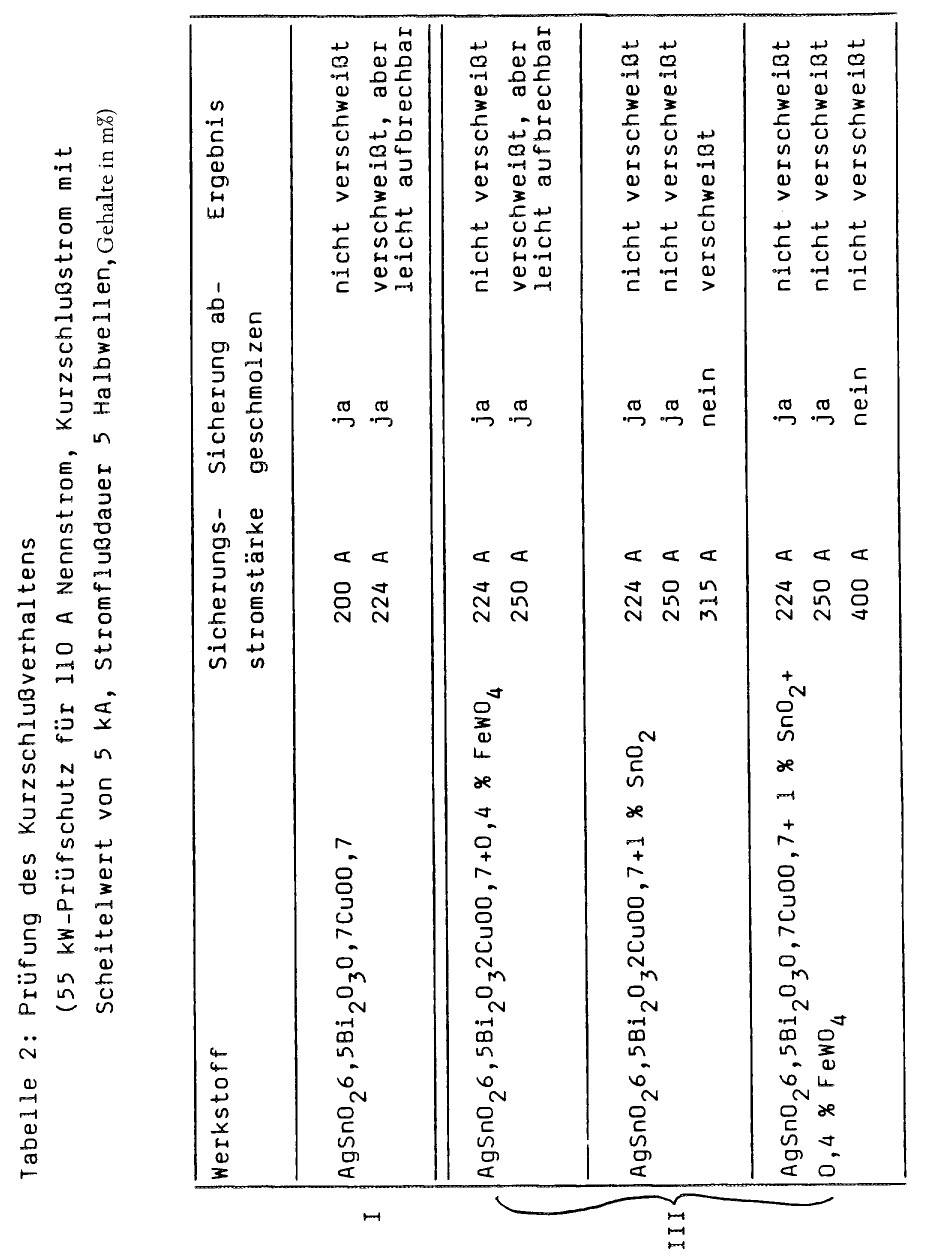

## Patentansprüche

1. Sinterverbundwerkstoff für elektrische Kontakte in Schaltgeräten der Energietechnik, insbesondere Niederspannungsschaltgeräten, mit der Konstitution AgSnO₂Bi₂O₃CuO und Metalloxidzusätzen, **dadurch gekennzeichnet**, daß das weitere Metalloxid separat zugemischtes Zinnoxid (SnO₂) ist und/oder Oxide von Eisen (Fe) und wenigstens einem Element der sechsten Nebengruppe des Periodischen Systems enthält.

2. Sinterverbundwerkstoff nach Anspruch 1, **gekennzeichnet** durch separat zugemischtes Zinnoxid (SnO₂) in Massenanteilen von weniger als 6 %.

3. Sinterverbundwerkstoff nach Anspruch 2, **gekennzeichnet** durch separat zugemischtes Zinnoxid (SnO₂) in Massenteilen von weniger als 3 %.

4. Sinterverbundwerkstoff nach Anspruch 3, **gekennzeichnet** durch separat zugemischtes Zinnoxid (SnO₂) in Massenanteilen von weniger als 1,5 %.

5. Sinterverbundwerkstoff nach Anspruch 1, **dadurch gekennzeichnet**, daß das weitere Metalloxid Ferrowolframat (FeWO₄) ist.

6. Sinterverbundwerkstoff nach Anspruch 5, **gekennzeichnet** durch Ferrowolframat (FeWO₄) in Massenanteilen von weniger als 3 %.

7. Sinterverbundwerkstoff nach Anspruch 6, **gekennzeichnet** durch Ferrowolframat (FeWO₄) in Massenanteilen von weniger als 1,5 %.

8. Sinterverbundwerkstoff nach Anspruch 7, **gekennzeichnet** durch einen Anteil von Ferrowolframat (FeWO₄) in Massenanteilen von weniger als 0,5 %.

9. Sinterverbundwerkstoff nach einem der vorhergehenden Ansprüche, **gekennzeichnet** durch 3 bis 12,5 m % Zinnoxid (SnO₂), 0,5 bis 4 m % Wismutoxid (Bi₂O₃), 0,3 bis 2m% Kupferoxid (CuO) und bis zu 3 m % Ferrowolframat (FeWO₄), Rest Silber (Ag).

10. Sinterverbundwerkstoff nach Anspruch 9, **gekennzeichnet** durch die Zusammensetzung in m% AgSnO₂6,5Bi₂O₃0,7CuO0,7 + SnO₂l.

11. Sinterverbundwerkstoff nach Anspruch 9, **gekennzeichnet** durch die Zusammensetzung im m% AgSnO₂6,5Bi₂O₃0,7CuO0,7 + FeWO₄0,4.

12. Sinterverbundwerkstoff nach Anspruch 9, **gekennzeichnet** durch die Zusammensetzung in m% AgSnO₂8Bi₂O₃lCuOl + FeWO₄0,4.

13. Sinterverbundwerkstoff nach Anspruch 9, **gekennzeichnet** durch die Zusammensetzung in m% AgSnO₂6,5Bi₂O₃2CuO0,7 + FeWO₄0,4.

14. Sinterverbundwerkstoff nach Anspruch 9, **gekennzeichnet** durch die Zusammensetzung in m% AgSnO₂6,5Bi₂O₃0,7CuO0,7 + SnO₂1 + FeWO₄0,4.

15. Verfahren zur Herstellung eines Sinterverbundwerkstoffes nach Anspruch 1 oder einem der Ansprüche 2 bis 14 mit der Konstitution AgSnO₂Bi₂O₃CuO und einem weiteren Metalloxid, **dadurch gekennzeichnet**, daß aus einer AgSnBiCu-Legierung vorgegebener Konzentration ein inneroxidiertes Legierungspulver erzeugt und mit einer vorgegebenen Pulvermenge des weiteren Metalloxides bzw. der weiteren Metalloxide gemischt wird, und daß die Pulvermischung durch sintertechnische Fertigungsschritte zu einem Formkörper mit einer Restporosität von unter 1,5 % verarbeitet wird.

16. Verfahren nach Anspruch 15, wobei das weitere Metalloxid Zinnoxid (SnO₂) und/oder Ferrowolframat (FeWO₄) ist, **dadurch gekennzeichnet**, daß das Mischen des AgSnO₂Bi₂O₃CuO-Pulvers mit dem SnO₂- und/oder FeWO₄-Pulver in einer Rührwerkskugelmühle unter Zugabe von organischen Substanzen erfolgt.

17. Verfahren nach Anspruch 16, **dadurch gekennzeichnet**, daß nach dem Trocknen der Pulvermischung durch Pressen, Sintern und Nachverdichten der Formkörper der Konstitution AgSnO₂Bi₂O₃CuO mit den Zusätzen SnO₂ und/oder FeWO₄ mit der Restporosität < 1,5 % gefertigt wird.

## Claims

1. Sintered composite material for electric contacts in power technology switching devices, especially low voltage switching devices, of the composition AgSnO₂Bi₂O₃CuO and metal oxide additives, characterized in that the further metal oxide is separately admixed stannic oxide (SnO₂) and/or contains oxides of iron (Fe) and at least one element of the sixth subgroup of the periodic system.

2. Sintered composite material according to Claim 1, characterized by separately admixed stannic oxide (SnO₂) in proportions by mass of less than 6%.

3. Sintered composite material according to Claim 2, characterized by separately admixed stannic oxide (SnO₂) in proportions by mass of less than 3%.

4. Sintered composite material according to Claim 3, characterized by separately admixed stannic oxide (SnO₂) in proportions by mass of less than 1.5%.

5. Sintered composite material according to Claim 1, characterized in that the further metal oxide is ferric tungstate (FeWO₄).

6. Sintered composite material according to Claim 5, characterized by ferric tungstate (FeWO₄) in proportions by mass of less than 3%.

7. Sintered composite material according to Claim 6, characterized by ferric tungstate (FeWO₄) in proportions by mass of less than 1.5%.

8. Sintered composite material according to Claim 7, characterized by a proportion of ferric tungstate (FeWO₄) in proportions by mass of less than 0.5%.

9. Sintered composite material according to one of the preceding claims, characterized by 3 to 12.5 m% stannic oxide (SnO₂), 0.5 to 4 m% bismuth oxide (Bi₂O₃), 0.3 to 2 m% copper oxide (CuO) and up to 3 m% ferric tungstate (FeWO₄), balance silver (Ag).

10. Sintered composite material according to Claim 9, characterized by the composition AgSnO₂6.5Bi₂O₃0.7CuO0.7 + SnO₂1 in m%.

11. Sintered composite material according to Claim 9, characterized by the composition AgSnO₂6.5Bi₂O₃0.7CuO0.7 + FeWO₄0.4 in m%.

12. Sintered composite material according to Claim 9, characterized by the composition AgSnO₂8Bi₂O₃1CuO1 + FeWO₄0.4 in m%.

13. Sintered composite material according to Claim 9, characterized by the composition AgSnO₂6.5Bi₂O₃2CuO0.7 + FeWO₄0.4 in m%.

14. Sintered composite material according to Claim 9, characterized by the composition AgSnO₂6.5Bi₂O₃0.7CuO0.7 + SnO₂1 + FeWO₄0.4 in m%.

15. Process for producing a sintered composite material according to Claim 1 or one of Claims 2 to 14 having the composition AgSnO₂Bi₂O₃CuO and a further metal oxide, characterized in that an internally oxidized alloy powder is formed from an AgSnBiCu alloy of predetermined concentration, and is mixed with a predetermined quantity of powder of the further metal oxide or of the further metal oxides, and in that the powder mixture is processed by sintering finishing steps into a moulding with a residual porosity of below 1.5%.

16. Process according to Claim 15, in which the further metal oxide is stannic oxide (SnO₂) and/or ferric tungstate (FeWO₄), characterized in that the mixing of the AgSnO₂Bi₂O₃CuO powder with the SnO₂ powder and/or FeWO₄ powder takes place in an agitator ball mill with the addition of organic substances.

17. Process according to Claim 16, characterized in that after the drying of the powder mixture the moulding of the composition AgSnO₂Bi₂O₃CuO with the additives SnO₂ and/or FeWO₄ with the residual porosity < 1.5% is prepared by pressing, sintering and further compression.

## Revendications

1. Matériau composite fritté pour contacts électriques dans des appareillages de la technique des courants forts, notamment dans des appareillages basse tension, constitué de AgSnO₂Bi₂O₃CuO additionné d'oxydes métalliques comme additifs, caractérisé en ce que l'oxyde métallique supplémentaire est de l'oxyde d'étain (SnO₂) additionné indépendamment et/ou des oxydes de fer (Fe) et au moins un élément du sixième sous-groupe de la classification périodique des éléments.

2. Matériau composite fritté suivant la revendication 1, caractérisé par de l'oxyde d'étain (SnO₂) additionné indépendamment dans des proportions en masse de moins de 6 %.

3. Matériau composite fritté suivant la revendication 2, caractérisé par de l'oxyde d'étain (SnO₂) additionné indépendamment dans des proportions en masse de moins de 3 %.

4. Matériau composite fritté suivant la revendication 3, caractérisé par de l'oxyde d'étain (SnO₂) additionné indépendamment dans des proportions en masse de moins de 1,5 %.

5. Matériau composite fritté suivant la revendication 1, caractérisé en ce que l'oxyde métallique supplémentaire est le tungstate de fer (FeWO₄).

6. Matériau composite fritté suivant la revendication 5, caractérisé par du tungstate (FeWO₄) de fer dans des proportions en masse de moins de 3 %.

7. Matériau composite fritté suivant la revendication 6, caractérisé par du tungstate (FeWO₄) de fer dans des proportions en masse de moins de 1,5 %.

8. Matériau composite fritté suivant la revendication 7, caractérisé par une proportion de tungstate (FeWO₄) de fer en masse de moins de 0,5 %.

9. Matériau composite fritté suivant l'une des revendications précédentes, caractérisé en ce qu'il contient 3 à 12,5 % en masse d'oxyde d'étain (SnO₂), 0,5 à 4 % en masse d'oxyde de bismuth (Bi₂O₃), 0,3 à 2 % en masse d'oxyde de cuivre (CuO) et jusqu'à 3 % en masse de tungstate de fer (FeWO₄), le reste étant de l'argent (Ag).

10. Matériau composite fritté suivant la revendication 9, caractérisé en ce qu'il a la composition en pourcentage de masse AgSnO₂6,5Bi₂O₃0,7CuO0,7 + SnO₂1.

11. Matériau composite fritté suivant la revendication 9, caractérisé en ce qu'il a la composition en pourcentage en masse AgSnO₂6,5Bi₂O₃0,7CuO0,7 + FeWO₄0,4.

12. Matériau composite fritté suivant la revendication 9, caractérisé en ce qu'il a la composition en pourcentage en masse AgSnO₂8Bi₂O₃1CuO1 + FeWO₄0,4.

13. Matériau composite fritté suivant la revendication 9, caractérisé en ce qu'il a la composition en pourcentage en masse AgSnO₂6,5BiO₃2CuO0,7 + FeWO₄0,4.

14. Matériau composite fritté suivant la revendication 9, caractérisé en ce qu'il a la composition en pourcentage en masse AgSnO₂6,5Bi₂O₃0,7CuO0,7 + SnO₂1 + FeWO₄0,4.

15. Procédé de fabrication d'un matériau composite fritté suivant la revendication 1 ou suivant l'une des revendications 2 à 14, constitué de AgSnO₂Bi₂O₃CuO et d'un oxyde métallique supplémentaire, caractérisé en ce que l'on produit à partir d'un alliage AgSnBiCu de concentration prescrite une poudre d'alliage oxydée intérieurement, on la mélange à une quantité pulvérulente prescrite de l'autre oxyde métallique supplémentaire ou des oxydes métalliques supplémentaires et on transforme le mélange pulvérulent par des étapes opératoires de frittage en une pièce ayant une porosité résiduelle de moins de 1,5 %.

16. Procédé suivant la revendication 15, dans lequel l'oxyde métallique supplémentaire est de l'oxyde d'étain (SnO₂) et/ou du tungstate de fer (FeWO₄), caractérisé en ce que l'on effectue le mélange de la poudre d'AgSnO₂Bi₂O₃CuO avec la poudre de SnO₂ et/ou de FeWO₄ dans un broyeur à boulets agitateur en ajoutant des substances organiques.

17. Procédé suivant la revendication 16, caractérisé en ce que après le séchage du mélange pulvérulent on termine par une compression, un frittage et une densification des pièces constituées de AgSnO₂Bi₂O₃CuO additionné de SnO₂ et/ou de FeWO₄ de porosité résiduelle inférieure à 1,5 %.
